# EUROPÄISCHE PATENTSCHRIFT

(11) **EP 2 848 897 B1**
(45) Veröffentlichungstag und Bekanntmachung des Hinweises auf die Patenterteilung: **09.03.2016**
(21) Anmeldenummer: 14002113.0
(22) Anmeldetag: 18.06.2014
(51) Int. Cl.: G01C 22/00, B60G 17/018, B60G 17/019, B60G 17/0195, B60G 17/052

(54) **Verfahren zur Bestimmung der Laufleistung einer Achse**
Method for determining the performance of an axle
Procédé de détermination du rendement de course d'un axe

(30) Priorität: 11.09.2013 DE 102013015159
(43) Veröffentlichungstag der Anmeldung: 18.03.2015
(73) Patentinhaber: WABCO GmbH, 30453 Hannover (DE)
(72) Erfinder: Stender, Axel, 31787 Hameln (DE); Witte, Norbert, 31867 Lauenau (DE)

(56) Entgegenhaltungen:
- DE-A1- 3 419 179
- DE-A1-102005 025 622
- DE-A1-102007 012 675
- US-A1- 2006 170 168
- WABCO: "Trailer EBS Lehrgang", 20120101 , 1. Januar 2012 (2012-01-01), Seiten 1-479, XP007922981, Gefunden im Internet: URL:http://inform.wabco-auto.com/intl/pdf/ 815/00/98/8150200983.pdf [gefunden am 2015-01-28]

## Beschreibung

Die Erfindung betrifft ein Verfahren zur Bestimmung einer tatsächlich zurückgelegten Wegstrecke B oder einer tatsächlich zurückgelegten Wegstrecke D einer anhebbaren Achse in einem Fahrzeug, insbesondere in einem Anhängefahrzeug, mit einem Fahrzeug-Wegstreckenzähler als Einrichtung zur Erfassung einer zurückgelegten Wegstrecke A des Fahrzeugs. Außerdem betrifft die Erfindung ein Steuergerät zur Durchführung des Verfahrens, ein System zur Bestimmung der tatsächlich zurückgelegten Wegstrecke und ein Fahrzeug mit dem System.

Anhebbare Achsen eines Fahrzeugs werden auch als Liftachsen bezeichnet. In Fahrzeugen mit elektronischem Bremssystem werden die Liftachsen selbsttätig in Abhängigkeit von einer gemessenen Achslast angehoben oder abgesenkt. Dazu werden Liftachsventile von dem elektronischen Bremssystem elektrisch oder pneumatisch angesteuert.

Anhängefahrzeuge für Nutzfahrzeuge werden oft geleast oder gemietet. Der Reifenverschleiß wird typischerweise separat abgerechnet, nämlich per zurückgelegter Wegstrecke des Fahrzeugs. Wenn das Fahrzeug mit Liftachsen ausgerüstet ist und die Liftachsen im Betrieb zeitweise angehoben sind, werden gleichwohl auch die Kosten für die Reifen dieser Achsen voll abgerechnet, obwohl die Reifen bzw. Achsen eine geringere Wegstrecke als das Fahrzeug zurückgelegt haben. Die Abrechnung ist demnach für den Leasingnehmer nachteilig.

Bekannt ist eine Sensierung aller Achsen eines Anhängefahrzeugs mit Raddrehzahlsensoren eines elektronischen Bremssystems bzw. die Ermittlung der zurückgelegten Wegstrecke der Reifen oder Achsen anhand einzelner Kilometerzähler je Reifen. Derart aufwendige Lösungen sollen möglichst vermieden werden.

Aufgabe der Erfindung ist die Erfassung der zurückgelegten Wegstrecke derart, dass eine Abrechnung ohne Benachteiligung möglich ist. Die Erfassung soll möglichst ohne Zusatzkosten erfolgen bzw. mit möglichst geringem Aufwand.

Das erfindungsgemäße Verfahren zur Lösung der Aufgabe weist die Merkmale des Anspruchs 1 auf. Danach sind folgende Schritte vorgesehen:
a) die anhebbare Achse wird auf ihren Status überwacht, nämlich ob die Achse "angehoben" oder "abgesenkt" ist,
b) um die von der anhebbaren Achse tatsächlich zurückgelegte Wegstrecke B oder D zu bestimmen, wird zeitweise mit dem Fahrzeug-Wegstreckenzähler mitgezählt, nämlich
   ba) solange die abhebbare Achse "abgesenkt" ist, um die von der anhebbaren Achse tatsächlich zurückgelegte Wegstrecke B zu bestimmen, oder
   bb) solange die anhebbare Achse "angehoben" ist, zur Ermittlung einer Wegstrecke C, wobei die Wegstrecke C von der Wegstrecke A des Fahrzeugs abgezogen wird, um die von der anhebbaren Achse tatsächlich zurückgelegte Wegstrecke D zu bestimmen.

Hierfür reicht grundsätzlich die Einrichtung zur Erfassung der zurückgelegten Wegstrecke A des Fahrzeugs aus. Es muss nur parallel dazu die Fahrtstrecke mit angehobener oder abgesenkter Achse festgehalten werden. Aus den derart ermittelten Werten lässt sich entweder unmittelbar oder durch Subtraktion die tatsächlich zurückgelegte Wegstrecke B oder D der anhebbaren Achse bestimmen. Die anhebbare Achse benötigt hierzu keine eigene Raddrehzahlerfassung oder Wegstreckenzählung anderer Art. Es muss nur die anhebbare Achse auf ihren Status überwacht werden. Je nach Ergebnis der Überwachung muss mit dem Fahrzeug-Wegstreckenzähler mitgezählt werden. Der Fahrzeug-Wegstreckenzähler ist vorzugsweise eine Kombination aus Sensor und Zähler. Sensor kann ein Raddrehzahlsensor oder ein anderer Sensor zur Detektion der Wegstrecke des Fahrzeugs sein. Bei dem Zähler handelt es sich beispielsweise um einen Speicher, der einem elektronischen Steuergerät zugeordnet ist. Die ermittelten, tatsächlich zurückgelegten Wegstrecken B, D sind theoretisch für jede anhebbare Achse identisch. Die Wegstrecke B bezieht sich auf das Mitzählen bei abgesenkter Achse, während die Wegstrecke D durch Berechnung aus dem Mitzählen bei angehobener Achse bestimmt wird. Für die Erfassung der Wegstrecken B, C und D können eigene Zähler bzw. Speicher verwendet werden.

Nach einem weiteren Gedanken der Erfindung ist vorgesehen, dass der Status der anhebbaren Achse durch eine Auswertung von Ansteuersignalen zur Bewegung der anhebbaren Achse ermittelt wird. In Fahrzeugen mit Luftfederung werden die Liftachsen typischerweise pneumatisch angehoben. Über Liftachsventile wird die erforderliche Druckluft zugeführt. Die Ansteuerung der Liftachsventile kann zugleich für die Überwachung des Status der anhebbaren Achse genutzt werden. Wenn das Liftachsventil zum Anheben der Achse angesteuert wird, gilt die betreffende Achse als "angehoben", nach Umsteuerung des Liftachsventils als "abgesenkt". Das Liftachsventil ist typischerweise ein Magnetventil und elektronisch ansteuerbar. Das Anheben der Liftachse kann auch hydraulisch oder auf andere Weise erfolgen.

Vorteilhafterweise werden eine oder mehrere der Wegstrecken A, B, C, D von einem Steuergerät eines elektronischen Bremssystems erfasst, berechnet und/oder gespeichert. Die Speicherung ist auch sinnvoll für die Ansteuerung einer Anzeige zur Ausgabe der tatsächlich zurückgelegten Wegstrecke der anhebbaren Achse und/oder der Wegstrecke des Fahrzeugs. Auch können die gespeicherten Daten an andere Bestandteile des elektronischen Bremssystems übergeben oder anderen Systemen im Fahrzeug zur Verfügung gestellt werden.

Nach einem weiteren Gedanken der Erfindung ist vorgesehen, dass ein Status der anhebbaren Achse, nämlich "angehoben" oder "abgesenkt", sowie Daten über die Wegstrecke A des Fahrzeugs über eine Telematikeinheit des Fahrzeugs an einen Empfänger übermittelt werden, und dass die tatsächlich zurückgelegte Wegstrecke B oder die tatsächlich zurückgelegten Wegstrecke D der anhebbaren Achse beim Empfänger bestimmt und/oder gespeichert wird. Als Empfänger kann beispielsweise ein Telematikportal eines Serviceanbieters vorgesehen sein. Das Telematikportal ist vom Halter des Fahrzeugs oder dem Betreiber eines Fuhrparks über das Internet aufrufbar. Der Halter/Betreiber kann auf diese Weise nach Wunsch oder kontinuierlich die zurückgelegten Wegstrecken des Fahrzeugs und der einzelnen Achsen abrufen. Die Daten über die Wegstrecke des Fahrzeugs können die über ein Satellitennavigationssystem ermittelten Fahrzeugbewegungen beinhalten, so dass die Daten von Raddrehzahlsensoren des Fahrzeugs nicht benötigt werden. Die vom Fahrzeug zurückgelegte Wegstrecke A kann aber auch über am Fahrzeug vorhandene Sensoren erfasst und von der Telematikeinheit an den Empfänger übermittelt werden.

Im Rahmen der Erfindung ist auch ein Steuergerät zur Durchführung des voranstehend beschriebenen Verfahrens vorgesehen. Das Steuergerät weist Anschlüsse und Schnittstellen für die benötigten Sensoren und ggf. für eine Telematikeinheit und/oder Ausgabeeinheit auf. Auf dem Steuergerät ist eine Software installiert, mit der das angegebene Verfahren durchführbar ist. Vorzugsweise handelt es sich um das Steuergerät des elektronischen Bremssystems im Fahrzeug. Typischerweise sind an das Steuergerät Raddrehzahlsensoren zumindest einer nicht anhebbaren Achse angeschlossen, vorzugsweise auch Liftachsventile. Im Steuergerät sind Speicher vorgesehen, in denen die Wegstrecken A, B, C und/oder D separat ablegbar sind. Die Speicher haben die Aufgabe von Zählern und können auch innerhalb eines oder mehrerer Speicher durch Software realisiert sein.

Ein erfindungsgemäßes System zur Bestimmung der tatsächlich zurückgelegten Wegstrecke B oder der tatsächlich zurückgelegten Wegstrecke D einer anhebbaren Achse eines Fahrzeugs, insbesondere eines Anhängefahrzeugs, weist die Merkmale des Anspruchs 6 auf. Vorgesehen sind ein Fahrzeug-Wegstreckenzähler als Einrichtung zur Erfassung einer zurückgelegten Wegstrecke A des Fahrzeugs sowie
a) Mittel zur Überwachung der anhebbaren Achse auf ihren Status, nämlich ob die Achse "angehoben" oder "abgesenkt" ist,
b) Mittel zum zeitweise Mitzählen mit dem Fahrzeug-Wegstreckenzähler,
   ba) solange die anhebbare Achse "abgesenkt" ist, um die von der anhebbaren Achse tatsächlich zurückgelegte Wegstrecke B zu bestimmen, oder
   bb) solange die anhebbare Achse "angehoben" ist, zur Ermittlung einer Wegstrecke C, wobei die Wegstrecke C von der Wegstrecke A des Fahrzeugs abgezogen wird, um die von der anhebbaren Achse tatsächlich zurückgelegte Wegstrecke D zu bestimmen.

Teil der Einrichtung zur Erfassung der zurückgelegten Wegstrecke A des Fahrzeugs sind vorzugsweise Raddrehzahlsensoren an einer nicht anhebbaren Achse.

Erfindungsgemäß kann das System ein elektronisches Bremssystem aufweisen, mit Raddrehzahlsensoren an einer vorzugsweise nicht anhebbaren Achse des Fahrzeugs. Ein elektronisches Bremssystem ist typischer Bestandteil eines Nutzfahrzeugs und muss nicht nachgerüstet werden, ebenso Raddrehzahlsensoren an der nicht anhebbaren Achse des Fahrzeugs.

Erfindungsgemäß kann das System ein Steuergerät aufweisen, insbesondere für ein elektronisches Bremssystem, wobei mit dem Steuergerät die tatsächlich zurückgelegte Wegstrecke B oder die tatsächlich zurückgelegten Wegstrecke D der anhebbaren Achse des Fahrzeugs bestimmt wird. Das Steuergerät weist vorzugsweise Anschlüsse für Raddrehzahlsensoren und/oder Liftachsventile auf.

Vorteilhafterweise ist als Teil des Systems auch ein Sensor zum Erkennen des Zustands der anhebbaren Achse vorgesehen, insbesondere zum Anschluss an ein Steuergerät. Alternativ oder zusätzlich kann der Status "angehoben" oder "abgesenkt" von anhebbaren Achsen (Liftachsen) auch aus Ansteuersignalen für die anhebbaren Achsen gewonnen werden.

Schließlich ist Gegenstand der Erfindung auch ein Fahrzeug, insbesondere Anhängefahrzeug, mit einem System nach einem der Ansprüche 6 bis 9.

Bevorzugtes Anwendungsgebiet der Erfindung sind alle Fahrzeuge mit Liftachsen, insbesondere Anhängefahrzeuge, vorzugsweise Sattelauflieger mit zwei oder drei Achsen.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen erläutert. Es zeigen:

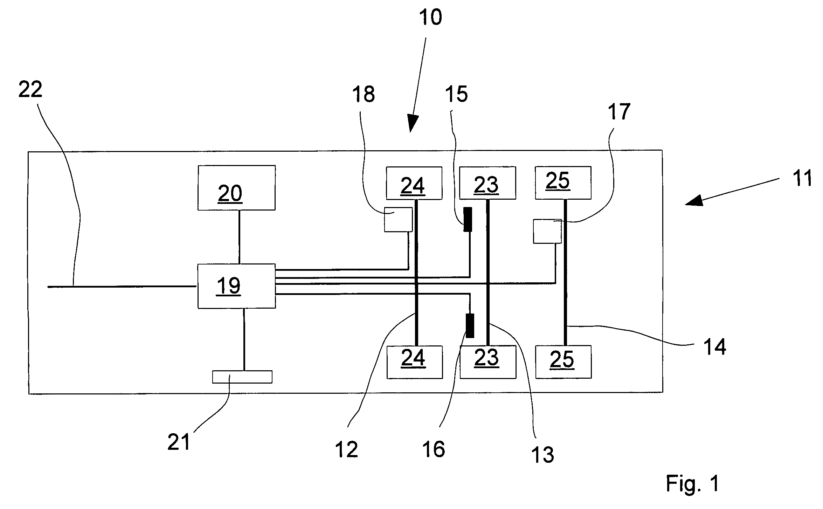

Fig. 1 in schematischer Draufsicht einen dreiachsigen Sattelauflieger,
Fig. 2 einige der in Fig. 1 gezeigten Bauteile in vergrößerter Darstellung, nämlich ein Steuergerät mit ausgewählten, angeschlossenen Bauteilen.

Ein Anhängefahrzeug 10, nämlich ein Sattelauflieger, weist an seinem Ende 11 drei Achsen 12, 13, 14 auf. Die mittlere Achse 13 ist beidseitig mit Raddrehzahlsensoren 15, 16 versehen. Der hinteren Achse 14 ist ein Liftachsventil 17 zugeordnet, der vordersten Achse 12 ein Liftachsventil 18.

Das Anhängefahrzeug 10 wird pneumatisch gebremst und ist mit einem elektronischen Bremssystem ausgestattet. Letzteres beinhaltet ein Steuergerät 19, an das die Sensoren 15, 16 und die Liftachsventile 17, 18 über entsprechende Leitungen angeschlossen sind. Zusätzlich können noch eine Telematikeinheit 20 und ein Display 21 an das Steuergerät 19 angeschlossen sein. Außerdem ist das Steuergerät 19 über einen Datenbus 22 mit genormter Schnittstelle an ein elektronisches Bremssystem eines nicht gezeigten Zugfahrzeugs anschließbar. Vom Steuergerät 19 angesteuerte Bremsventile, Modulatoren usw. sind nicht eingezeichnet. Das elektronische Bremssystem ist hier nach Art eines 2S/2M-Antiblockiersystems ausgestattet. Demnach sind zusätzlich zu den beiden Raddrehzahlsensoren 15, 16 zwei Modulatoren vorhanden. Eine umfangreichere Ausstattung (mehr Sensoren/mehr Modulatoren) ist möglich.

Die beiden äußeren Achsen 12, 14 sind Liftachsen, während die mittlere Achse 13 feststehend ist. Durch Auswertung der Signale der Raddrehzahlsensoren 15, 16 ist die zurückgelegte Wegstrecke des Anhängefahrzeugs 10 und der Achse 13 ermittelbar. Gleiches gilt für Reifen 23 auf der Achse 13. Die zurückgelegte Wegstrecke gilt aber nicht für die Achsen 12, 14 und deren Reifen 24, 25. Sobald die Achsen 12, 14 geliftet sind, werden die Reifen 24, 25 nicht belastet und abgenutzt. Die Abnutzung der Reifen 23 einerseits und 24, 25 andererseits ist deshalb sehr unterschiedlich.

Das Anheben der Achsen 12, 14 erfolgt durch nicht gezeigte pneumatische Elemente. Diese werden über die Liftachsventile 17, 18 angesteuert. Die Steuerung erfolgt über das Steuergerät 19. Zu den Liftachsventilen 17, 18 führende Druckluftleitungen sind in der Figur nicht eingezeichnet.

Der Status "geliftet" oder "abgesenkt" der Achsen 12, 14 ist ableitbar aus der Ansteuerung der Liftachsventile 17, 18. Eine Kontrolle oder Sensierung ist möglich durch typischerweise vorhandene Balgdrucksensoren (nicht gezeigt) oder andere Beladungssensoren zumindest an der feststehenden mittleren Achse 13. Beim Anheben der Liftachsen 12, 14 wird die Achse 13 höher belastet, beim Absenken der Achsen 12, 14 entlastet. Zusätzlich oder alternativ können nicht gezeigte Liftsensoren an den Achsen 12, 14 zur Bestimmung des Status vorhanden sein.

In der Praxis werden derartige Anhängefahrzeuge oft geleast oder gemietet. Dabei wird der Verschleiß der Reifen per zurückgelegte Wegstrecke des Anhängefahrzeugs 10 abgerechnet. Je länger die Achsen 12, 14 geliftet sind, umso nachteiliger ist die Abrechnung für einen Leasingnehmer oder Mieter des Anhängefahrzeugs. Zur genaueren Bestimmung der Abnutzung der Reifen werden verschiedene Wegstrecken in Abhängigkeit vom Status (geliftet/abgesenkt) der Achsen 12, 14 festgehalten.

Konkret wird von einem ersten Kilometerzähler die von den Reifen 23 der mittleren Achse 13 zurückgelegte Wegstrecke erfasst, beispielsweise 174.716,23 km. Letztere ist gleich einer vom Fahrzeug zurückgelegten Wegstrecke A und wird mit Hilfe der Raddrehzahlsensoren 15, 16 erfasst. Mit einem zweiten Kilometerzähler wird eine Wegstrecke C erfasst, während der die Achse 14 angehoben ist, beispielsweise 54.519,48 km. Analog dazu wird mit einem dritten Kilometerzähler eine Wegstrecke C festgehalten, während der die Achse 12 angehoben ist, beispielsweise 48.278,78 km. Durch Subtraktion von der Wegstrecke A der Achse 13 können die mit abgesenkten Achsen 12, 14 zurückgelegte Wegstrecken D berechnet werden.

Die Daten der zweiten und dritten Kilometerzähler werden natürlich nicht unmittelbar durch Messung erfasst, da keine Raddrehzahlsensoren an den Achsen 12, 14 vorhanden sind, sondern durch zeitweises Mitzählen der Kilometer am ersten Kilometerzähler. Die sich durch Messung und Berechnung ergebenden Daten sind in der nachfolgenden Tabelle dargestellt:

| | Gezählt/Gemessen km | Berechnet km |
|---|---|---|
| 1. Kilometerzähler, sensierte Achse 13 Wegstrecke A | 174.716,23 | |
| 2. Kilometerzähler /Achse 14 angehoben Wegstrecke C | 54.519,48 | |
| 3. Kilometerzähler /Achse 12 angehoben Wegstrecke C | 48.278,78 | |
| Wegstrecke D Achse 14 | | 120.197 |
| Wegstrecke A Achse 13 | 174.716,00 | |
| Wegstrecke D Achse 12 | | 126.438 |

Sämtliche Berechnungen werden von der Software des elektronischen Bremssystems, insbesondere im Steuergerät 19 ausgeführt. Die genannten Kilometerzähler können durch Software, separate Bauteile oder eine Kombination von beidem realisiert werden. Die erfassten oder ermittelten Daten können am Display 21 angezeigt werden. Das Display 21 kann auch Bestandteil eines externen und nur zu Ablesezwecken angeschlossenen Diagnosegerätes sein.

Anstelle der Berechnung durch Subtraktion und Zählung der Kilometer mit angehobenen Achsen 12 und/oder 14, können mit dem zweiten und dritten Kilometerzähler auch Wegstrecken B mit abgesenkten Achsen 12, 14 mitgezählt werden. Sobald die Achsen 12 und/oder 14 geliftet werden, werden der zweite und/oder der dritte Kilometerzähler gestoppt. Erst nach dem erneuten Absenken der Achsen 12 und/oder 14 laufen der zweite und/oder dritte Kilometerzähler weiter.

In allen Fällen wird nur für die mittlere Achse 13 eine reale Drehzahlerfassung benötigt. Die Umdrehungen bzw. Kilometer der liftbaren Achsen 12, 14 werden aus der Zählung der Kilometer für die Achse 13 abgeleitet. Hierzu werden das Anheben und Absenken der Achsen 12, 14 zum Unterbrechen der Zählung und zum Weiterzählen genutzt. Maßgeblich sind jeweils die Betätigung des betreffenden Liftachsventils 17, 18 oder (sofern vorhanden) die Signale von Liftachssensoren.

Die erfassten und/oder berechneten Daten können auch mittels der Telematikeinheit 20 per Mobilfunk oder auf andere Weise an einen externen, nicht gezeigten Empfänger übermittelt und dort weiterverarbeitet werden. Empfänger ist vorzugsweise ein Telematikportal eines Anbieters von Telematik-Dienstleistungen. Auf diese Weise können sämtliche Berechnungen außerhalb des Steuergerätes 19 ausgeführt werden. Erforderlich ist nur die Übermittlung der erfassten Daten. Es können auch nur die Daten des ersten Kilometerzählers (Kilometerzähler der Achse 13) sowie die Stati der Achse 12 (angehoben/nicht angehoben) und, wenn vorhanden, der Achse 14 übertragen werden. In diesem Fall erfolgen alle Berechnungen im Telematikportal.

Schließlich können die Daten über den Datenbus 22 an andere elektronische Steuergeräte und/oder an das angekoppelte Zugfahrzeug übertragen werden.

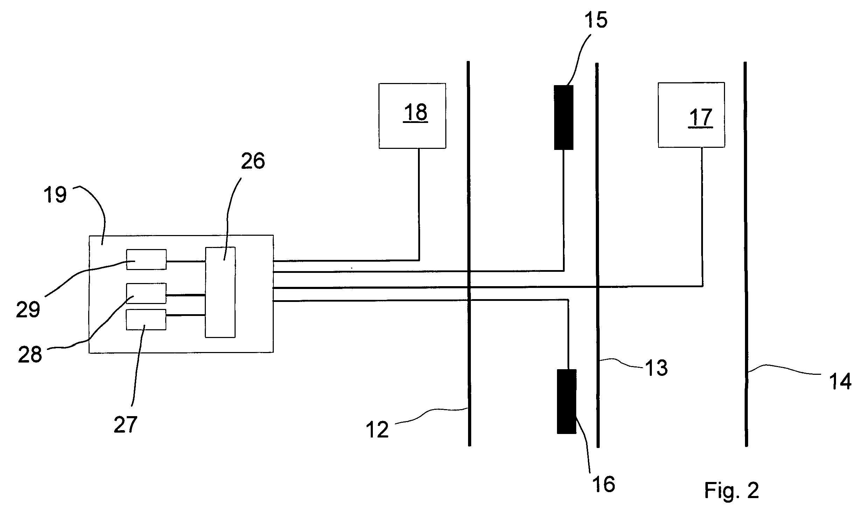

Wie aus Fig. 2 ersichtlich, sind im Steuergerät 19 zumindest ein Prozessor 26 und daran angeschlossene Speicher 27, 28, 29 zum Zählen der von den Achsen 12, 13, 14 zurückgelegten Wegstrecken vorhanden. In der Praxis kann es sich bei den Speichern 27, 28, 29 um eigenständige Speicherbausteine handeln oder um Bereiche eines größeren Speichers.

Die Signale der Raddrehzahlsensoren 15, 16 der nicht anhebbaren Achse 13 repräsentieren zugleich die vom Fahrzeug zurückgelegte Wegstrecke A. Letztere wird nach Verarbeitung der Signale im Prozessor 26 im Speicher 29 aufsummiert.

In den Speichern 27, 28 werden die von den anhebbaren Achsen 12, 14 zurückgelegten Wegstrecken B oder D abgespeichert. Voraussetzung ist zeitweises Mitzählen der Wegstrecke A der Achse 13. Ausgelöst und gestoppt wird das Mitzählen vom Prozessor 26 in Abhängigkeit von den vom Steuergerät 19 an die Liftachsventile 17, 18 übersandten Steuersignale. Dabei können die Wegstrecken B der Achsen 12, 14 unmittelbar durch teilweises Mitzählen bei abgesenkten Achsen 12, 14 ermittelt werden, während die Wegstrecken D der Achsen 12, 14 durch Subtraktion der mitgezählten Wegstrecken C bei angehobenen Achsen 12, 14 von der zurückgelegten Wegstrecke A des Fahrzeugs errechnet werden.

## Patentansprüche

1. Verfahren zur Bestimmung einer tatsächlich zurückgelegten Wegstrecke B oder einer tatsächlich zurückgelegten Wegstrecke D einer anhebbaren Achse (12, 14) in einem Fahrzeug, insbesondere in einem Anhängefahrzeug (10), mit einem Fahrzeug-Wegstreckenzähler als Einrichtung zur Erfassung einer zurückgelegten Wegstrecke A des Fahrzeugs, **gekennzeichnet durch** folgende Schritte:
a) die anhebbare Achse (12, 14) wird auf ihren Status überwacht, nämlich ob die Achse (12, 14) "angehoben" oder "abgesenkt" ist,
b) zeitweises Mitzählen mit dem Fahrzeug-Wegstreckenzähler,
ba) solange die anhebbare Achse (12, 14) "abgesenkt" ist, um die von der anhebbaren Achse (12, 14) tatsächlich zurückgelegte Wegstrecke B zu bestimmen, oder
bb) solange die anhebbare Achse (12, 14) "angehoben" ist, zur Ermittlung einer Wegstrecke C, wobei die Wegstrecke C von der Wegstrecke A des Fahrzeugs abgezogen wird, um die von der anhebbaren Achse (12, 14) tatsächlich zurückgelegte Wegstrecke D zu bestimmen.

2. Verfahren nach Anspruch 1, **dadurch gekennzeichnet, dass** der Status der anhebbaren Achse (12, 14) durch eine Auswertung von Ansteuersignalen zur Bewegung der anhebbaren Achse (12, 14) ermittelt wird.

3. Verfahren nach Anspruch 1 oder 2, **dadurch gekennzeichnet, dass** eine oder mehrere der Wegstrecken A, B, C, D von einem Steuergerät (19) eines elektronischen Bremssystems erfasst, berechnet und/oder gespeichert werden.

4. Verfahren nach Anspruch 1 oder einem der weiteren Ansprüche, **dadurch gekennzeichnet, dass** ein Status der anhebbaren Achse (12, 14), nämlich "angehoben" oder "abgesenkt", sowie Daten über die Wegstrecke A des Fahrzeugs über eine Telematikeinheit (20) des Fahrzeugs an einen Empfänger übermittelt werden, und dass die tatsächlich zurückgelegte Wegstrecke B oder die tatsächlich zurückgelegten Wegstrecke D der anhebbaren Achse (12, 14) beim Empfänger bestimmt und/oder gespeichert wird.

5. Steuergerät (19) zur Durchführung des Verfahrens nach einem der voranstehenden Ansprüche.

6. System zur Bestimmung einer tatsächlich zurückgelegten Wegstrecke B oder einer tatsächlich zurückgelegten Wegstrecke D einer anhebbaren Achse (12, 14) eines Fahrzeugs, insbesondere eines Anhängefahrzeugs (10), mit einem Fahrzeug-Wegstreckenzähler als Einrichtung zur Erfassung einer zurückgelegten Wegstrecke A des Fahrzeugs, **gekennzeichnet durch**
a) Mittel zur Überwachung der anhebbaren Achse (12, 14) auf ihren Status, nämlich ob die Achse (12, 14) "angehoben" oder "abgesenkt" ist,
b) Mittel zum zeitweisen Mitzählen mit dem Fahrzeug-Wegstreckenzähler,
ba) solange die anhebbare Achse (12, 14) "abgesenkt" ist, um die von der anhebbaren Achse (12, 14) tatsächlich zurückgelegte Wegstrecke B zu bestimmen, oder
bb) solange die anhebbare Achse (12, 14) "angehoben" ist, zur Ermittlung einer Wegstrecke C, wobei die Wegstrecke C von der Wegstrecke A des Fahrzeugs abgezogen wird, um die von der anhebbaren Achse (12, 14) tatsächlich zurückgelegte Wegstrecke D zu bestimmen.

7. System nach Anspruch 6, **gekennzeichnet durch** ein elektronisches Bremssystem, mit Raddrehzahlsensoren (15, 16) an einer vorzugsweise nicht anhebbaren Achse (13) des Fahrzeugs.

8. System nach Anspruch 6 oder 7, **gekennzeichnet durch** ein Steuergerät (19) insbesondere für ein elektronisches Bremssystem, wobei mit dem Steuergerät (19) die tatsächlich zurückgelegte Wegstrecke B oder die tatsächlich zurückgelegten Wegstrecke D der anhebbaren Achse (12, 14) des Fahrzeugs bestimmt wird.

9. System nach Anspruch 6 oder einem der weiteren Ansprüche, **gekennzeichnet durch** einen Sensor zum Erkennen des Zustands der anhebbaren Achse (12, 14), insbesondere zum Anschluss an ein Steuergerät (19).

10. Fahrzeug, insbesondere Anhängefahrzeug (10), mit einem System nach einem der Ansprüche 6 bis 9.

## Claims

1. Method for determining a distance B or a distance D actually covered by a raisable axle (12, 14) in a vehicle, in particular in a trailer vehicle (10), having a vehicle odometer as a device for recording a distance A covered by the vehicle,
**characterized by** the following steps:
a) the raisable axle (12, 14) is monitored for its status, namely whether the axle (12, 14) is "raised" or "lowered",
b) occasionally counting along with the vehicle odometer,
ba) as long as the raisable axle (12, 14) is "lowered", in order to determine the distance B actually covered by the raisable axle (12, 14), or
bb) as long as the raisable axle (12, 14) is "raised", in order to determine a distance C, the distance C being subtracted from the distance A covered by the vehicle in order to determine the distance D actually covered by the raisable axle (12, 14).

2. Method according to Claim 1, **characterized in that** the status of the raisable axle (12, 14) is determined by evaluating control signals for moving the raisable axle (12, 14).

3. Method according to Claim 1 or 2, **characterized in that** one or more of the distances A, B, C, D is/are recorded, calculated and/or stored by a control device (19) of an electronic brake system.

4. Method according to Claim 1 or one of the further claims, **characterized in that** a status of the raisable axle (12, 14), namely "raised" or "lowered", and data relating to the distance A covered by the vehicle are transmitted to a receiver via a telematics unit (20) of the vehicle, and **in that** the distance B or the distance D actually covered by the raisable axle (12, 14) is determined and/or stored in the receiver.

5. Control device (19) for carrying out the method according to one of the preceding claims.

6. System for determining a distance B or a distance D actually covered by a raisable axle (12, 14) of a vehicle, in particular of a trailer vehicle (10), having a vehicle odometer as a device for recording a distance A covered by the vehicle,
**characterized by**
a) means for monitoring the raisable axle (12, 14) for its status, namely whether the axle (12, 14) is "raised" or "lowered",
b) means for occasionally counting along with the vehicle odometer,
ba) as long as the raisable axle (12, 14) is "lowered", in order to determine the distance B actually covered by the raisable axle (12, 14), or
bb) as long as the raisable axle (12, 14) is "raised", in order to determine a distance C, the distance C being subtracted from the distance A covered by the vehicle in order to determine the distance D actually covered by the raisable axle (12, 14).

7. System according to Claim 6, **characterized by** an electronic brake system having wheel speed sensors (15, 16) on an axle (13) of the vehicle which preferably cannot be raised.

8. System according to Claim 6 or 7, **characterized by** a control device (19), in particular for an electronic brake system, the control device (19) being used to determine the distance B or the distance D actually covered by the raisable axle (12, 14) of the vehicle.

9. System according to Claim 6 or one of the further claims, **characterized by** a sensor for detecting the state of the raisable axle (12, 14), in particular for connection to a control device (19).

10. Vehicle, in particular trailer vehicle (10), having a system according to one of Claims 6 to 9.

## Revendications

1. Procédé pour déterminer une distance B parcourue effectivement ou une distance D parcourue effectivement d'un essieu pouvant être levé (12, 14) dans un véhicule, en particulier dans un véhicule remorque (10), comprenant un compteur kilométrique de véhicule en tant que dispositif pour détecter une distance A parcourue du véhicule, **caractérisé par** les étapes suivantes :
a) surveillance de l'état de l'essieu pouvant être levé (12, 14), à savoir pour déterminer si l'essieu (12, 14) est "levé" ou "abaissé",
b) comptage temporaire avec le compteur kilométrique du véhicule,
ba) tant que l'essieu pouvant être levé (12, 14) est "abaissé", afin de déterminer la distance B parcourue effectivement par l'essieu pouvant être levé (12, 14), ou
bb) tant que l'essieu pouvant être levé (12, 14) est "levé", pour déterminer une distance C, la distance C étant déduite de la distance A du véhicule, afin de déterminer la distance D parcourue effectivement par l'essieu pouvant être levé (12, 14).

2. Procédé selon la revendication 1, **caractérisé en ce que** l'état de l'essieu pouvant être levé (12, 14) est déterminé par une analyse de signaux de commande pour le déplacement de l'axe pouvant être levé (12, 14).

3. Procédé selon la revendication 1 ou 2, **caractérisé en ce qu'**une ou plusieurs des distances A, B, C, D sont déterminées, calculées et/ou mémorisées par un appareil de commande (19) d'un système de freinage électronique.

4. Procédé selon la revendication 1, ou selon l'une quelconque des autres revendications, **caractérisé en ce qu'**un état de l'axe pouvant être levé (12, 14), à savoir "levé" ou "abaissé", ainsi que des données concernant la distance A du véhicule sont communiquées à un récepteur par le biais d'une unité de télématique (20) du véhicule, et **en ce que** la distance B parcourue effectivement ou la distance D parcourue effectivement de l'axe pouvant être levé (12, 14) est déterminée/mémorisée au niveau du récepteur.

5. Appareil de commande (19) pour mettre en oeuvre le procédé selon l'une quelconque des revendications précédentes.

6. Système pour déterminer une distance B effectivement parcourue ou une distance D effectivement parcourue d'un axe pouvant être levé (12, 14) d'un véhicule, en particulier d'un véhicule remorque (10), comprenant un compteur kilométrique de véhicule en tant que dispositif pour déterminer une distance A parcourue du véhicule,
**caractérisé par**
a) des moyens pour surveiller l'état de l'axe pouvant être levé (12, 14), à savoir si l'axe (12, 14) est "levé" ou "abaissé",
b) des moyens pour effectuer un comptage temporaire avec le compteur kilométrique du véhicule,
ba) tant que l'essieu pouvant être levé (12, 14) est "abaissé", afin de déterminer la distance B parcourue effectivement par l'essieu pouvant être levé (12, 14), ou
bb) tant que l'essieu pouvant être levé (12, 14) est "levé", pour déterminer une distance C, la distance C étant déduite de la distance A du véhicule, afin de déterminer la distance D parcourue effectivement par l'essieu pouvant être levé (12, 14).

7. Système selon la revendication 6, **caractérisé par** un système de freinage électronique, avec des capteurs de vitesse de roue (15, 16) au niveau d'un essieu (13) du véhicule, de préférence ne pouvant pas être levé.

8. Système selon la revendication 6 ou 7, **caractérisé par** un appareil de commande (19), en particulier pour un système de freinage électronique, la distance B effectivement parcourue ou la distance D effectivement parcourue de l'axe pouvant être levé (12, 14) du véhicule étant déterminée avec l'appareil de commande (19).

9. Système selon la revendication 6 ou selon l'une quelconque des autres revendications, **caractérisé par** un capteur pour reconnaître l'état de l'essieu pouvant être levé (12, 14), en particulier pour son raccordement à un appareil de commande (19).

10. Véhicule, en particulier véhicule remorque (10), comprenant un système selon l'une quelconque des revendications 6 à 9.
